# FASCICULE DE BREVET EUROPEEN

(11) **EP 1 117 545 B1**
(45) Date de publication et mention de la délivrance du brevet: **21.05.2003**
(21) Numéro de dépôt: 99952478.8
(22) Date de dépôt: 01.10.1999
(51) Int. Cl.: B60C 9/20, B60C 9/18

(54) **ARMATURE DE SOMMET POUR PNEUMATIQUE RADIAL**
VERSTÄRKUNGSGÜRTEL FÜR RADIALEN REIFEN
RADIAL TYRE BREAKER REINFORCEMENT

(30) Priorité: 02.10.1998 FR 9812593
(43) Date de publication de la demande: 25.07.2001
(73) Titulaire: Sociéte de Technologie Michelin, 63000 Clermont-Ferrand Cedex 09 (FR); Michelin Recherche et Technique S.A., 1763 Granges-Paccot (CH)
(72) Inventeur: COSTA PEREIRA, Pedro, F-63000 Clermont-Ferrand (FR); HERBELLEAU, Yves, F-63200 Riom (FR)
(74) Mandataire: Dequire, Philippe Jean-Marie Denis
(86) Numéro de dépôt international: EP9907264
(87) Numéro de publication internationale: WO00020234

(56) Documents cités:
- FR-A- 2 222 232
- FR-A- 2 499 912
- US-A- 4 838 330
- PATENT ABSTRACTS OF JAPAN vol. 009, no. 132 (M-385), 7 juin 1985 (1985-06-07) & JP 60 015203 A (BRIDGESTONE KK), 25 janvier 1985 (1985-01-25)
- PATENT ABSTRACTS OF JAPAN vol. 018, no. 133 (M-1571), 4 mars 1994 (1994-03-04) & JP 05 319016 A (BRIDGESTONE CORP), 3 décembre 1993 (1993-12-03)

## Description

L'invention concerne les sommets des pneumatiques et notamment les gommes de liaison en contact avec les fils de renforcement de ces sommets.

Les sommets des pneumatiques comprennent usuellement un renforcement de carcasse, un renforcement de ceinture avec usuellement au moins deux nappes de renforcement superposées formées de fils parallèles dans chaque nappe et croisés d'une nappe à l'autre et une bande de roulement.

Il est bien connu que, dans des conditions d'utilisation sévères, au fur et à mesure de l'augmentation des distances parcourues, des fissures peuvent apparaître à l'extrémité latérale des fils des nappes de renforcement du sommet. Ces fissures peuvent notamment ensuite se propager le long des fils, puis se rejoindre entre deux ou plusieurs fils et ainsi entraîner une séparation des extrémités latérales des deux nappes de renforcement du sommet.

Pour limiter l'initiation et la propagation de ces fissures, on insère usuellement entre les extrémités des nappes de renforcement des bandes de mélange caoutchouteux de plus faible module d'élasticité que celui des couches de gomme de liaison des nappes de sommet.

Le document FR 2 499 912, qui correspond au préambule de la revendication 1, décrit un tel pneumatique dans lequel, entre deux nappes de renforcement sont disposées axialement de façon adjacente deux couches de gommes de propriétés mécaniques différentes.

L'invention a pour objet un pneumatique dont la structure du sommet est apte à contenir ces phénomènes de séparation des extrémités latérales des nappes de renforcement du sommet et à repousser leur apparition à des niveaux de sollicitation tels que l'on peut jouir en pratique d'une marge de sécurité encore supérieure.

Dans ce qui suit, on entend par « fil », aussi bien des monofilaments que des multifilaments, ou des assemblages comme des câbles, des retors ou bien encore n'importe quel type d'assemblage équivalent, et ceci, quels que soient la matière et le traitement de ces fils, le terme fil englobant tout type de revêtement de surface ou enrobage notamment de caoutchouc ayant subi un début de vulcanisation ou préencollage pour favoriser l'adhésion sur le caoutchouc non vulcanisé.

On entend par « couche de gomme de liaison » pour une nappe de renforcement donnée le mélange caoutchoutique en contact avec les fils de renforcement de la nappe, adhérant à ceux-ci et remplissant les interstices entre fils adjacents. Dans la pratique industrielle courante, pour une nappe de renforcement de sommet ou de carcasse donnée, on utilise une même composition de gomme de liaison pour les différentes zones du pneumatique.

On entend par « contact » entre un fil et une couche de gomme de liaison, le fait que, au moins une partie de la circonférence extérieure du fil est en contact intime avec le mélange caoutchoutique constituant de la gomme de liaison. Si le fil comporte un revêtement ou un enrobage, le terme contact veut dire que c'est la circonférence extérieure de ce revêtement ou de cet enrobage qui est en contact intime avec le mélange caoutchoutique constituant de la gomme de liaison.

Par « module d'élasticité » d'un mélange caoutchoutique, on entend un module d'extension sécant obtenu à une déformation d'extension uniaxiale de l'ordre de 100 % après deux cycles d'accommodation à cette amplitude de déformation et à température ambiante.

Le pneumatique selon l'invention comprend un sommet, deux flancs et deux bourrelets, une armature de carcasse ancrée dans les deux bourrelets et une armature de ceinture, cette armature de ceinture comprenant au moins deux nappes de renforcement superposées formées de fils parallèles dans chaque nappe et croisés d'une nappe à l'autre en faisant avec la direction circonférentielle des angles (α, β) compris entre 10° et 55°. Ce pneumatique est caractérisé en ce que les fils d'au moins l'une des deux nappes de renforcement sont en contact successivement, du même côté de ladite nappe, en cheminant axialement du plan équatorial du pneumatique vers l'une, au moins, des extrémités latérales de la nappe de renforcement, avec, au moins, une couche de gomme de liaison d'un premier module d'élasticité puis une couche de gomme de liaison d'un second module d'élasticité inférieur au premier.

La couche de gomme de liaison de module d'élasticité inférieure à celui de la couche de gomme de liaison disposée dans la partie centrale du sommet a l'avantage de mieux résister à la fissuration dans les zones d'extrémité latérales des nappes de renforcement fortement sollicitées.

Selon un premier mode de réalisation, les largeurs axiales des deux nappes de renforcement de sommet étant différentes, les fils en contact avec les couches de gomme de liaison d'un premier et d'un second modules d'élasticité sont les fils de la nappe de renforcement dont la largeur axiale L est la plus petite et lesdites couches de gomme de liaison d'un premier et d'un second modules d'élasticité sont disposées radialement du côté de la seconde nappe de renforcement de sommet.

Ce mode de réalisation a l'avantage de diminuer de façon sensible les contraintes maximales de cisaillement entre les deux nappes, ce qui est très favorable pour limiter les phénomènes de fissuration.

Selon un second mode de réalisation, les couches de gomme de liaison d'un premier et d'un second modules d'élasticité sont disposées radialement entre les deux nappes de renforcement de sommet et sont, chacune, en contact avec les fils des deux nappes de renforcement.

Ce mode de réalisation a l'avantage de limiter à une le nombre de couches de gommes de liaison disposées radialement entre les deux nappes de renforcement, ce qui facilite la fabrication du pneumatique.

Préférentiellement, les fils d'au moins l'une des extrémités axiales de la nappe de renforcement de sommet dont la largeur axiale L est la plus petite sont en contact, radialement des deux côtés de ladite nappe, avec ladite couche de gomme de liaison d'un second module d'élasticité.

Les fils des extrémités axiales des deux nappes de renforcement de sommet disposées, au moins, d'un même côté du plan équatorial, peuvent aussi être en contact, radialement des deux côtés de ces nappes, avec la couche de gomme de liaison d'un second module d'élasticité.

On peut disposer, en outre, une couche de gomme de découplage d'un troisième module d'élasticité entre les extrémités axiales desdites deux nappes de renforcement de sommet, d'un côté, au moins, du plan équatorial, et dans lequel le troisième module d'élasticité est inférieur au second module d'élasticité.

Ces variantes renforcent la résistance à la fissuration à l'extrémité des fils des nappes de sommet.

Préférentiellement, la largeur axiale des zones de contact entre une couche de gomme de liaison d'un second module d'élasticité et les fils d'une nappe de renforcement est supérieure à 5% de la demi largeur axiale de la nappe de renforcement. Il n'est pas nécessaire qu'elle soit supérieure à 30 % de cette demi largeur axiale.

En complément, de préférence, les fils de la nappe de renforcement radialement extérieure sont en contact, au moins dans la zone centrale de cette nappe, du côté radialement extérieur, avec une couche de gomme de liaison d'un quatrième module d'élasticité. Le quatrième module d'élasticité est inférieur au premier module d'élasticité.

Cette disposition est particulièrement avantageuse lorsque l'armature de ceinture comprend une troisième nappe de renforcement disposée radialement extérieurement relativement aux deux nappes de renforcement croisées. Cette troisième nappe de renforcement peut être constituée de fils de renforcement orientés dans la direction circonférentielle du pneumatique.

Le rapport entre le second module d'élasticité et le premier module d'élasticité est compris entre 0,5 et 0,9 et préférentiellement entre 0,6 et 0,8. Le premier module d'élasticité peut être compris entre 9 et 13 MPa.

Le troisième module d'élasticité peut être compris entre 3 et 6 MPa et le quatrième entre 3 et 8 MPa.

Selon une disposition avantageuse, les couches de gomme de liaison s'étendent axialement extérieurement au-delà de l'extrémité axiale des fils des nappes de sommet.

Selon un autre mode de réalisation, les fils de l'une au moins des nappes de renforcement sont en contact, dans la partie centrale du sommet, avec une couche de gomme de liaison complémentaire d'un cinquième module d'élasticité supérieur au premier module d'élasticité. Ce cinquième module d'élasticité peut être compris entre 12 et 20 MPa.

Ce mode de réalisation est particulièrement avantageux lorsque l'armature de ceinture ne comporte pas de nappe de renforcement composée de fils orientés dans la direction circonférentielle du pneumatique. Dans ce cas, la rigidité des gommes de liaison dans la partie centrale du sommet contribue sensiblement à la rigidité globale du sommet et contribue à l'obtention d'excellentes caractéristiques de comportement routier des véhicules équipés de tels pneumatiques.

Avantageusement, les fils de l'une des nappes sommet ayant un diamètre Φ, toute couche de gomme de liaison d'un second module d'élasticité en contact avec ces fils a, au moins dans la zone d'extrémité latérale de cette nappe sommet, une épaisseur au droit des fils supérieure ou égale à Φ/2. Cette épaisseur minimale améliore sensiblement la résistance à la fissuration du sommet des pneumatiques selon l'invention. Dans le cas de véhicules soumis à de fortes sollicitations en roulage, il est souhaitable que cette épaisseur minimale soit supérieure ou égale à Φ.

L'invention est maintenant décrite au moyen du dessin annexé dans lequel :
- la figure 1 présente en coupe méridienne partielle un premier mode de réalisation d'un sommet de pneumatique radial selon l'invention ;
- la figure 1a représente un agrandissement de la coupe de la figure 1 ;
- la figure 2 présente en coupe méridienne partielle un second mode de réalisation d'un sommet de pneumatique selon l'invention ;
- la figure 2a représente un agrandissement de la coupe de la figure 2 ;
- la figure 3 présente en coupe méridienne partielle un troisième mode de réalisation d'un sommet de pneumatique selon l'invention ;
- la figure 4 présente en coupe méridienne partielle un quatrième mode de réalisation d'un sommet de pneumatique selon l'invention ;
- la figure 5 présente en coupe méridienne partielle un cinquième mode de réalisation d'un sommet de pneumatique selon l'invention ;
- la figure 6 présente en coupe méridienne partielle un sixième mode de réalisation d'un sommet de pneumatique selon l'invention ;
- la figure 7 présente en coupe méridienne partielle un septième mode de réalisation d'un sommet de pneumatique selon l'invention.

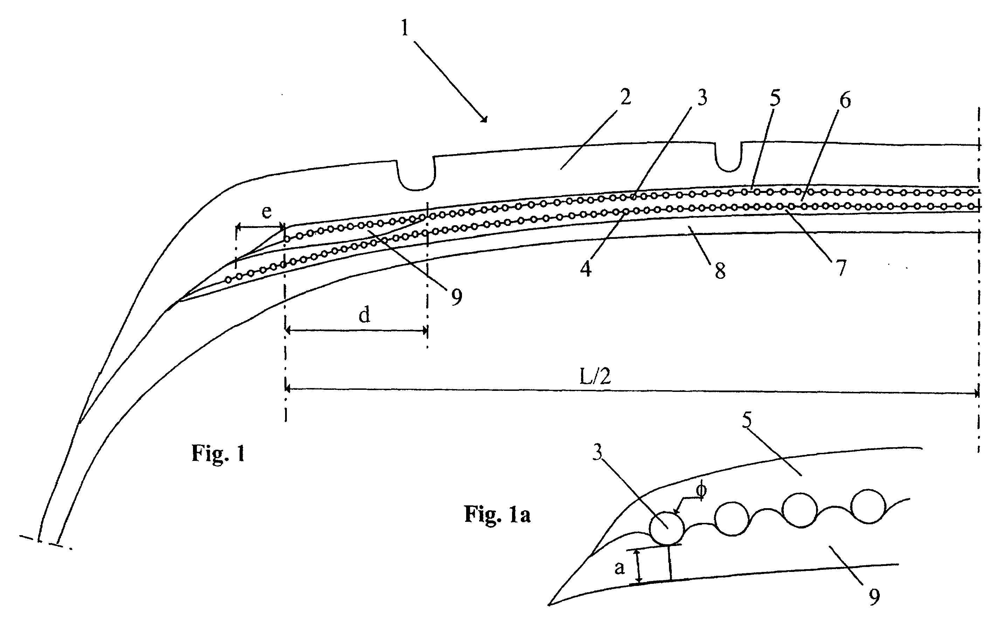

A la figure 1 est présenté, en coupe méridienne partielle et de façon schématique, un premier mode de réalisation d'un sommet de pneumatique selon l'invention. Ce sommet 1 comprend notamment une bande de roulement 2 et deux nappes de renforcement de sommet 3 et 4. Ces deux nappes sont superposées et constituées de fils parallèles dans chaque nappe et croisés d'une nappe à l'autre en faisant avec la direction circonférentielle des angles (α, β) compris entre 10 et 55°. Les fils de la nappe 3 sont en contact, du côté radialement extérieur, avec la couche de gomme de liaison 5 et, du côté radialement intérieur avec deux couches de gomme de liaison, la couche 6 dans la partie centrale de la nappe et la couche 9 à l'extrémité latérale de la nappe. Les fils de la nappe 4 sont en contact, du côté radialement extérieur, avec la couche de gomme de liaison 6 et, du côté radialement intérieur avec une autre couche de gomme de liaison, la couche 7. Radialement en dessous de la couche de gomme de liaison 7, dans la zone référencée 8, le sommet 1 comporte notamment une armature de carcasse radiale non représentée.

Les nappes 3 et 4 sont formées exclusivement de fils disposés de telle façon qu'ils ne présentent pas de contact entre eux. Par exemple, les fils de la nappe 3 sont en contact avec les couches 5, 6 et 9. La couche 5 est aussi en contact entre les fils avec la couche 6, dans la partie centrale du sommet, et avec la couche 9 dans la partie latérale du sommet.

Dans la partie centrale du sommet, il y a donc une couche unique de gomme de liaison 6. Cette couche est directement en contact avec les fils des deux nappes de renforcement de sommet 3 et 4. Cette première couche de gomme de liaison a usuellement un module d'élasticité compris entre 9 et 13 MPa.

Dans la partie latérale du sommet, les fils de la nappe 3, dont la largeur axiale L est inférieure à celle de la nappe 4, sont en contact avec une seconde couche de gomme de liaison 9, de module d'élasticité inférieur à celui de la première couche. Le rapport des modules est compris, de préférence, entre 0,6 et 0,8. Cette couche de plus faible module limite l'amplitude des contraintes maximales de cisaillement et favorise une bonne résistance à la propagation de fissures entre les deux nappes.

Les couches de gomme de liaison 5 et 7 peuvent usuellement être des mélanges de caoutchouc de même composition que la couche 6. La couche 6 peut aussi être d'un module supérieur à celui des couches 5 et 7, pour permettre d'augmenter la rigidité de dérive du sommet si nécessaire.

La largeur axiale d de la zone de contact entre la couche 9 et les fils de la nappe 3 est comprise entre 5 et 30 % de la demi largeur axiale L/2 de la nappe 3. En deçà de 5 %, l'effet de la couche 9 n'est pratiquement plus sensible, au-delà de 30 %, les propriétés de rigidité du sommet, et ainsi de poussée de dérive peuvent être affectées. De plus, les couches de gomme de liaison se prolongent axialement au-delà des fils des nappes 3 et 4. A titre d'exemple, la couche 9 se prolonge d'une distance axiale e supérieure à 3 mm.

D'éventuelles nappes complémentaires de renforcement ou de protection ne sont pas représentées sur la figure 1 ainsi que les suivantes.

La figure 1a est un agrandissement de l'extrémité latérale de la nappe 3. Les fils de cette nappe ont un diamètre Φ. et sont en contact avec radialement extérieurement la couche 5 et radialement intérieurement avec la couche 9. Cette figure montre l'épaisseur a de la couche 9, au droit du dernier fil de la nappe 3. Cette épaisseur a doit toujours être supérieure à Φ/2 et même, dans le cas de pneumatiques pour véhicules utilitaires, être supérieure à Φ. Comme la couche 9 s'étend axialement extérieurement relativement à ce dernier fil, celui-ci est bien entouré très intimement du mélange constituant de la couche de liaison 9 du côté radialement intérieur, dirigé vers la seconde nappe de renforcement 4. Le diamètre d'un fil métallique d'une nappe de renforcement de sommet est de l'ordre de 0,8 à 1,5 mm dans le cas de pneumatiques pour véhicules de tourisme, et de l'ordre de 1,5 à 1,8 mm dans le cas de pneumatiques pour véhicules utilitaires.

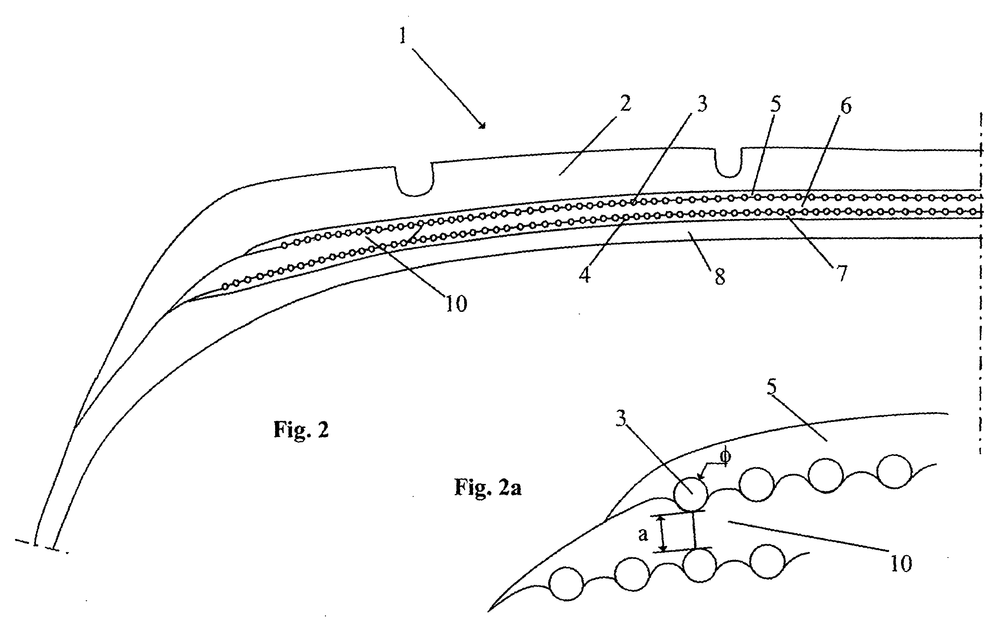

La figure 2 présente de façon similaire à la figure 1, une variante de réalisation du sommet selon l'invention. Dans cette variante, une couche de gomme de liaison 10 est disposée à l'extrémité latérale des deux nappes 3 et 4 et est en contact avec les fils de ces deux nappes. La zone de liaison entre les deux couches 10 et 6, entre les deux nappes 3 et 4 est de préférence inclinée en biseau.

Cette variante a des effets substantiellement similaires à ceux de la précédente, mais a l'avantage d'être plus facile à mettre en oeuvre.

La figure 2a est un agrandissement de l'extrémité latérale des nappes 3 et 4. On voit que l'épaisseur minimum a de la couche de liaison 10, au droit du dernier fil de la couche 3 correspond sensiblement à la distance radiale entre deux fils. Cette distance doit aussi être supérieure au diamètre Φ/2 voire Φ.

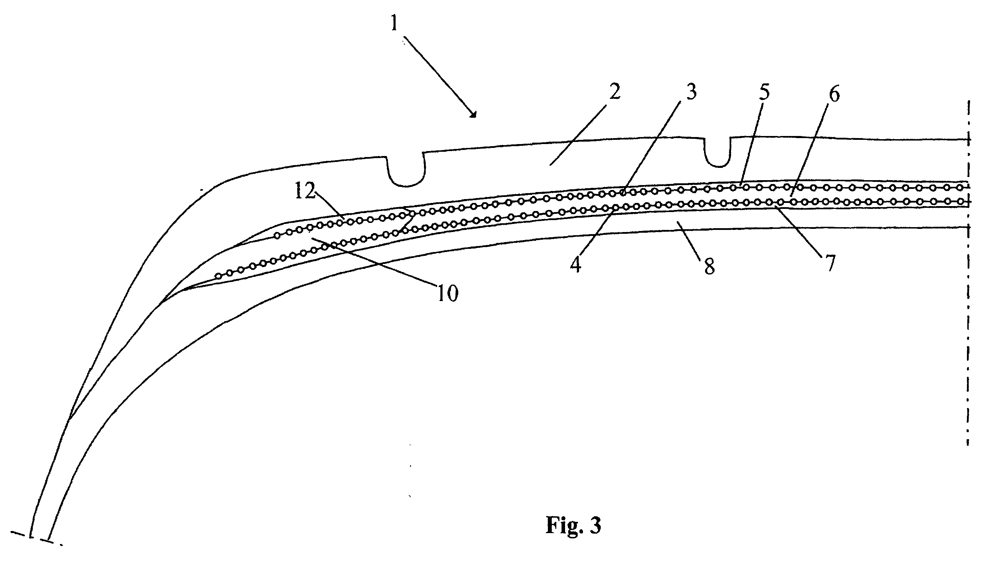

A la figure 3, une troisième variante est présentée. Dans celle-ci, les fils de la nappe 3 sont en contact, du côté radialement extérieur, avec la couche de gomme de liaison 5 dans la zone centrale du pneumatique et avec une couche de gomme de liaison 12 à l'extrémité latérale de la nappe 3. La couche de gomme de liaison 12 a le même module d'élasticité que celui de la couche 10. Comme les couches de gomme de liaison 10 et 12, s'étendent axialement au-delà de l'extrémité des fils sur plusieurs millimètres, 3 au moins, ces fils de l'extrémité axiale de la nappe 3 sont entourés dans toutes les directions par une couche de gomme de liaison de second module d'élasticité. L'épaisseur de ces couches de gomme de liaison de second module d'élasticité est, au droit des derniers fils des nappes 3 et 4, supérieure à Φ/2, voire Φ.

On détermine le diamètre Φ d'un fil métallique par application de la norme ASTM D2969 à l'aide d'un palmer. Dans le cas de fils textiles, la détermination se fait selon le procédé suivant. Le fil étant sous tension, il coupe un faisceau de lumière parallèle. L'ombre portée sur une barrette de diodes photoréceptrices est mesurée instantanément. Le résultat d'une mesure est la largeur moyenne de l'ombre, déterminée en 900 points sur 50 cm de fil. Le diamètre Φ est calculé en faisant la moyenne de 4 mesures.

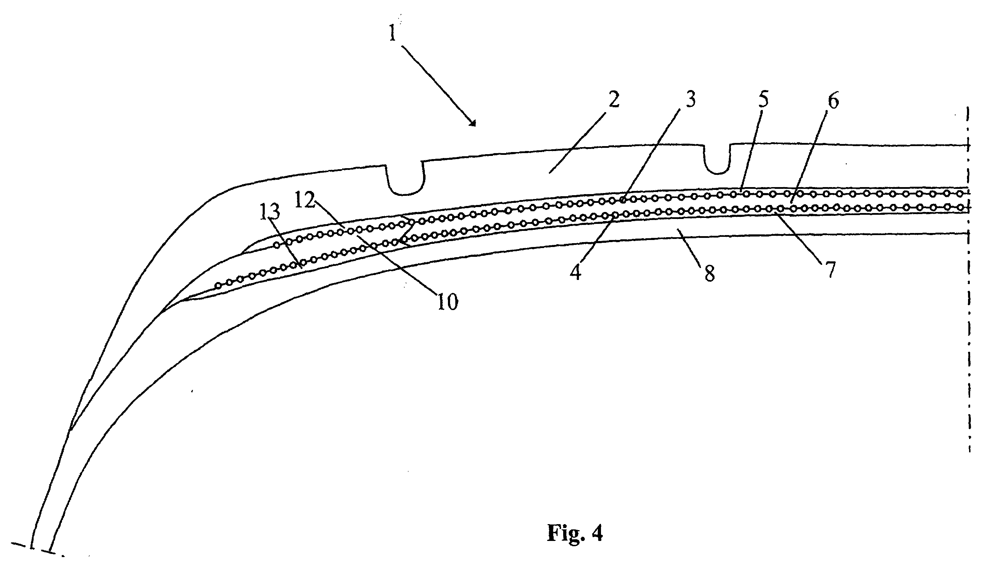

A la figure 4, les fils de la nappe 4 sont en contact, du côté radialement intérieur, avec la couche de gomme de liaison 7 dans la zone centrale du pneumatique et avec une couche de gomme de liaison 13 à l'extrémité latérale de la nappe 4. Les couches 10, 12 et 13 ont le même module d'élasticité, inférieur à celui de la couche 6. Les fils des extrémités axiales des nappes 3 et 4 sont, dans cette variante, tous entourés dans toutes les directions d'une couche de gomme de liaison de second module d'élasticité. L'épaisseur de cette couche est aussi, au moins au droit des derniers fils des nappes 3 et 4, supérieure au demi-diamètre voire au diamètre des fils pour garantir une bonne endurance du sommet du pneumatique.

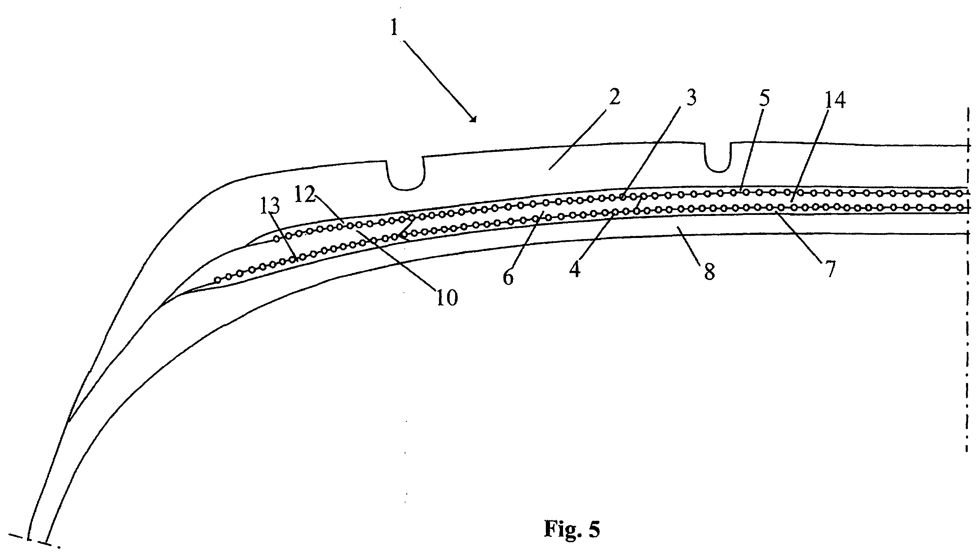

A la figure 5, la partie centrale du sommet comprend, entre les nappes 3 et 4, une couche de gomme de liaison 14 de haut module d'élasticité destinée à augmenter la rigidité du sommet. Cette variante a l'avantage d'augmenter la poussée de dérive du pneumatique sans pénaliser sa résistance à la fissuration à l'extrémité des fils des nappes de renforcement.

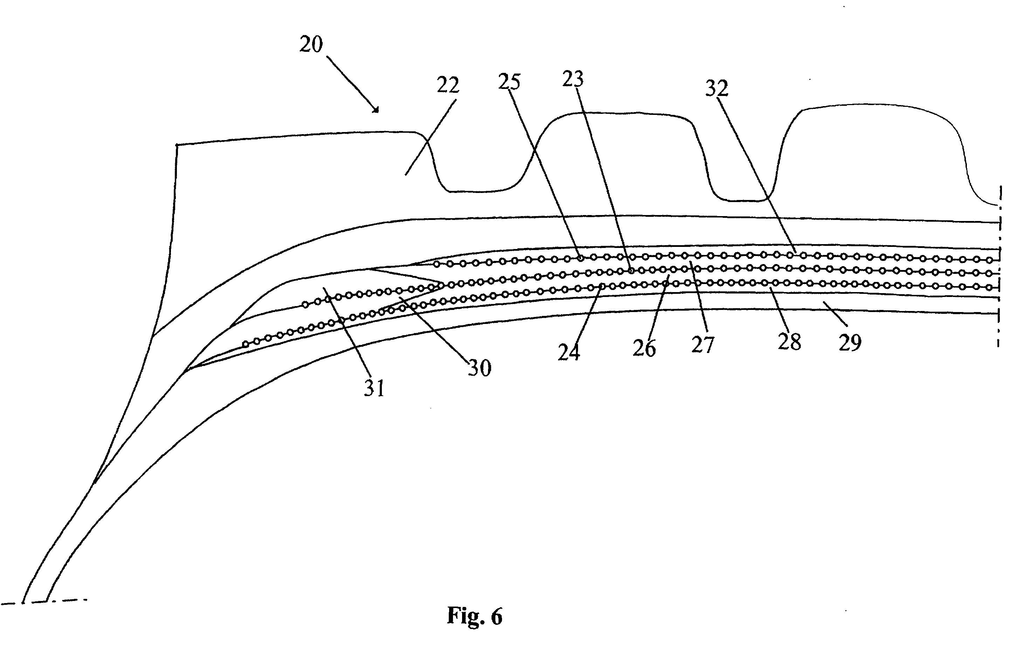

A la figure 6 est présenté un sommet 20 de pneumatique destiné particulièrement à équiper des véhicules utilitaires. Comme précédemment le sommet 20 comprend radialement de l'intérieur vers l'extérieur, notamment, une armature de carcasse non représentée dans la zone référencée 29, deux nappes de renforcement de sommet superposées et croisées 24 et 23 ainsi que leurs gommes de liaison, 28, 26, et 30, pour la nappe 24, et 26, 30, 27 et 31 pour la nappe 23. Le sommet comprend, en outre, une troisième nappe de renforcement 25 dont les fils sont orientés dans la direction circonférentielle. Cette troisième nappe est en contact, radialement intérieurement avec la couche de gomme de liaison 27 et extérieurement avec la couche 32. Avantageusement, ces deux couches 27 et 32 ont un module d'élasticité compris entre 3 et 8 MPa.

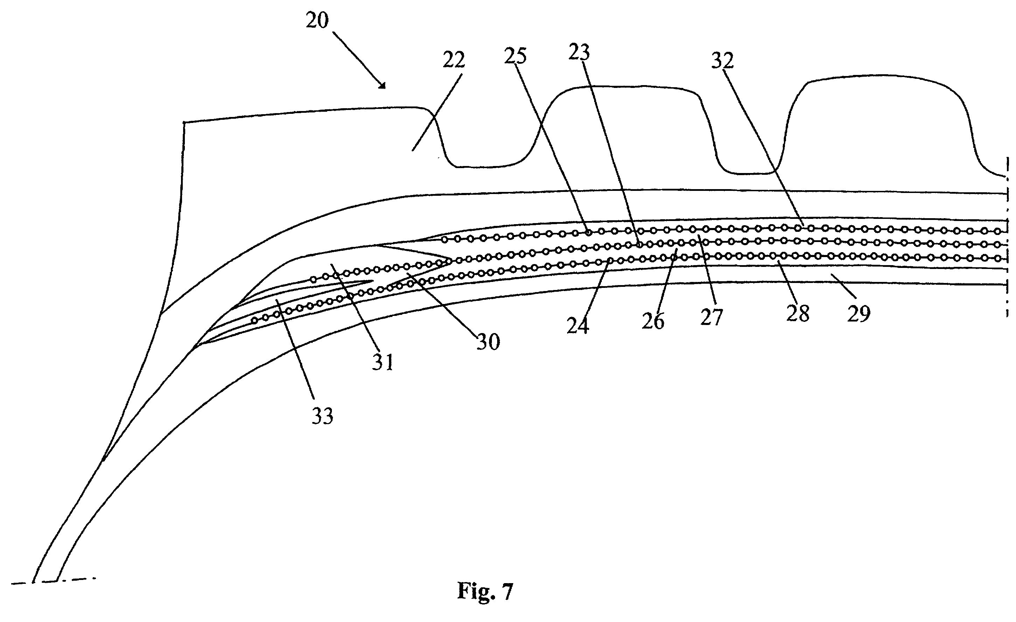

La figure 7 présente un dernier mode de réalisation d'un sommet selon l'invention. Dans celui-ci, une couche de gomme de découplage 33 a été disposée entre les extrémités des deux nappes de renforcement 23 et 24. Cette couche 33 a un bas module d'élasticité, compris entre 3 et 6 MPa, qui est inférieur à celui des couches 30 et 31.

Une telle couche 33 peut avantageusement être disposée entre les extrémités des nappes de renforcement de sommet de tous les modes de réalisation de sommets de pneumatiques selon l'invention.

Des pneumatiques 315/70 R 22.5 ont été réalisés avec les configurations suivantes :
- témoin : pneumatique dans lequel les couches de gomme de liaison s'étendent sur toute la largeur axiale des nappes de renforcement de sommet ;
- A : pneumatique incorporant la solution présentée à la figure 3 : les deux extrémités latérales de la nappe 3 sont en contact radialement intérieurement et extérieurement avec deux couches 10, 12 de gommes de liaison de module d'élasticité égal à 7 MPa, le module d'élasticité de la couche 6 étant égal à 11 MPa ;
- B : pneumatique incorporant la solution présentée à la figure 4, les extrémités latérales des deux nappes 3 et 4 sont en contact radialement intérieurement et extérieurement avec des couches de gommes de liaison de module égal à 7 MPa, le module d'élasticité de la couche 6 étant égal à 11 MPa ;
- C : pneumatique similaire au pneumatique B, incorporant en outre la solution présentée à la figure 7, c'est-à-dire qu'une couche de gomme de liaison de très bas module d'élasticité 33 est disposée entre les extrémités latérales des deux nappes, cette couche 33 a un module d'élasticité de 5 MPa.

Ces pneumatiques ont été testé en roulage ligne droite.

Relativement au témoin, la solution A présente une amélioration substantielle de durée de vie de l'ordre de 10%. On constate aussi que les températures de fonctionnement atteintes dans les parties latérales du sommet du pneumatique sont inférieures à celles du témoin. Cela est dû à ce que les mélanges de module d'élasticité inférieur ont aussi une hystérésis inférieure et ainsi l'énergie dissipée est inférieure en roulage.

La solution B apporte un gain similaire en durée de vie à celle de la solution A. Il est à noter que la présence de la couche de gomme de liaison 13, sous l'extrémité latérale de la nappe 4 limite très nettement la progression de fissures sous cette extrémité latérale, cela peut prolonger le temps de service du pneumatique.

La solution C est la plus performante en kilométrage parcouru par les différents pneumatiques testés. On constate aussi les températures de fonctionnement les plus basses pour les mêmes raisons que celles exposées plus haut.

Ces essais montrent l'intérêt de pouvoir ajuster la rigidité et l'hystérésis des couches de gommes de liaison des deux nappes de renforcement de sommet croisées en fonction de la section circonférentielle du pneumatique pour prolonger la durée de vie en service des pneumatiques.

Pour réaliser les différents pneumatiques selon l'invention, il est très avantageux de les confectionner sur un noyau rigide imposant la forme de sa cavité intérieure. On applique sur ce noyau, dans l'ordre requis par l'architecture finale, tous les constituants du pneumatique, qui sont disposés directement à leur place finale, sans subir de conformation à aucun moment de la confection Cette confection peut notamment utiliser les dispositifs décrits dans le brevet EP 0 243 851 pour la pose des fils du renfort de carcasse, EP 0 248 301 pour la pose des renforts de sommet et EP 0 264 600 pour la pose des gommes caoutchoutiques. Le pneumatique peut être moulé et vulcanisé comme exposé dans le brevet US 4 895 692.

## Revendications

1. Pneumatique comprenant un sommet (1, 20), deux flancs et deux bourrelets, une armature de carcasse ancrée dans les deux bourrelets et une armature de ceinture, ladite armature de ceinture comprenant au moins deux nappes de renforcement (3, 4, 23, 24) superposées formées de fils parallèles dans chaque nappe et croisés d'une nappe à l'autre en faisant avec la direction circonférentielle des angles (α, β) compris entre 10° et 55°, **caractérisé en ce que** les fils d'au moins l'une des deux nappes de renforcement sont en contact successivement, du même côté de ladite nappe, en cheminant axialement du plan équatorial du pneumatique vers l'une, au moins, des extrémités latérales de la nappe de renforcement, avec, au moins, une couche de gomme de liaison d'un premier module d'élasticité (5, 6, 7, 26) puis une couche de gomme de liaison d'un second module d'élasticité (9, 10, 12, 13, 30, 31) inférieur au premier et **en ce que** ladite armature de ceinture est réalisée en appliquant independamment lesdits fils desdites deux nappes de renforcement et lesdites couches de gomme de liaison.

2. Pneumatique selon la revendication 1, dans lequel les largeurs axiales des deux nappes de renforcement (3, 4) de sommet (1) étant différentes, les fils en contact avec les couches de gomme de liaison d'un premier (6) et d'un second (9) modules d'élasticité sont les fils de la nappe de renforcement (3) dont la largeur axiale L est la plus petite et dans lequel lesdites couches de gomme de liaison d'un premier (6) et d'un second (9) modules d'élasticité sont disposées radialement du côté de l'autre nappe de renforcement (4) de sommet.

3. Pneumatique selon la revendication 1, dans lequel lesdites couches de gomme de liaison d'un premier (6, 26) et d'un second (10, 30) modules d'élasticité sont disposées radialement entre lesdites deux nappes de renforcement (3, 4, 23, 24) de sommet et sont, chacune, en contact avec les fils desdites deux nappes de sommet (3, 4, 23, 24).

4. Pneumatique selon la revendication 3, dans lequel les fils d'au moins l'une des extrémités axiales de la nappe de renforcement (3, 23) de sommet (1, 20) dont la largeur axiale L est la plus petite sont en contact, radialement des deux côtés de ladite nappe (3, 23), avec ladite couche de gomme de liaison d'un second module d'élasticité (10, 12, 30, 31).

5. Pneumatique selon la revendication 3, dans lequel, les fils des extrémités axiales des deux nappes de renforcement (3, 4) de sommet disposées, au moins, d'un même côté du plan équatorial, sont en contact, radialement des deux côtés desdites nappes, avec ladite couche de gomme de liaison il 0;12, 13) d'un second module d'élasticité.

6. Pneumatique selon l'une des revendications 1 à 5, dans lequel on dispose, en outre, une couche de gomme d'un troisième module d'élasticité (33) entre les extrémités axiales desdites deux nappes de renforcement de sommet (23, 24), d'un côté, au moins, du plan équatorial, et dans lequel le troisième module d'élasticité est inférieur au second module d'élasticité.

7. Pneumatique selon l'une des revendications 1 à 6, dans lequel la largeur axiale des zones de contact entre une couche de gomme de liaison (9, 10, 12, 13, 30, 31) d'un second module d'élasticité et les fils d'une nappe de renforcement (3, 4, 23, 24) est supérieure à 5 % de la demi largeur axiale de ladite nappe de renforcement.

8. Pneumatique selon l'une des revendications 1 à 7, dans lequel la largeur axiale des zones de contact entre une couche de gomme de liaison (9, 10, 12, 13, 30, 31) d'un second module d'élasticité et les fils d'une nappe de renforcement (3, 4, 23, 24) est inférieure à 30 % de la demi largeur axiale de ladite nappe de renforcement.

9. Pneumatique selon l'une des revendications 1 à 8, dans lequel les fils de ladite nappe de renforcement (23) radialement extérieure sont en contact, au moins dans la zone centrale de ladite nappe, du côté radialement extérieur, avec une couche de gomme de liaison (27) d'un quatrième module d'élasticité, et dans lequel le quatrième module d'élasticité est inférieur au premier module d'élasticité.

10. Pneumatique selon l'une des revendications 1 à 9, dans lequel le rapport entre le second module d'élasticité et le premier module d'élasticité est compris entre 0,5 et 0,9.

11. Pneumatique selon l'une des revendications 1 à 9, dans lequel le rapport entre le second module d'élasticité et le premier module d'élasticité est compris entre 0,6 et 0,8.

12. Pneumatique selon l'une des revendications 1 à 11, dans lequel le premier module d'élasticité est compris entre 9 et 13 MPa.

13. Pneumatique selon l'une des revendications 6 à 12, dans lequel le troisième module d'élasticité est compris entre 3 et 6 MPa.

14. Pneumatique selon l'une des revendications 9 à 13, dans lequel le quatrième module d'élasticité est compris entre 3 et 8 MPa.

15. Pneumatique selon l'une des revendications 1 à 14, dans lequel les couches de gomme de liaison (9) s'étendent axialement d'au moins 3 mm extérieurement au-delà de l'extrémité axiale des fils des nappes de sommet

16. Pneumatique selon l'une des revendications 1 à 15, dans lequel les fils de l'une au moins des nappes de renforcement (3, 4) sont en contact, dans la partie centrale du sommet, avec une couche de gomme de liaison complémentaire (14) d'un cinquième module d'élasticité supérieur au premier module d'élasticité.

17. Pneumatique selon la revendication 16, dans lequel le cinquième module d'élasticité est compris entre 12 et 20 MPa.

18. Pneumatique selon l'une des revendications 1 à 17, dans lequel, les fils de l'une des nappes sommet (3, 4, 23, 24) ayant un diamètre Φ, toute couche de gomme de liaison d'un second module d'élasticité (9, 10, 12, 13, 30, 31) en contact avec lesdits fils a, au moins dans la zone d'extrémité latérale de ladite nappe sommet, une épaisseur au droit desdits fils supérieure ou égale à Φ/2.

19. Pneumatique selon l'une des revendications 1 à 17, dans lequel, les fils de l'une des nappes sommet (3, 4, 23, 24) ayant un diamètre Φ, toute couche de gomme de liaison d'un second module d'élasticité (9, 10, 12, 13, 30, 31) en contact avec lesdits fils a, au moins dans la zone d'extrémité latérale de ladite nappe sommet, une épaisseur au droit desdits fils supérieure ou égale à Φ.

## Patentansprüche

1. Reifen mit einem Scheitel (1, 20), zwei Flanken und zwei Wülsten, einer Karkassenbewehrung, die in den beiden Wülsten verankert ist, und einer Gürtelbewehrung, wobei diese Gürtelbewehrung mindestens zwei übereinanderliegende Verstärkungslagen (3, 4, 23, 24) aufweist, die aus Drähten gebildet sind, die in jeder Lage parallel und von einer Lage zur anderen überkreuz verlaufen, unter Bildung von Winkeln (α, β) zur Umfangsrichtung, die zwischen 10° und 55° liegen, **dadurch gekennzeichnet, daß** die Drähte mindestens der einen der beiden Verstärkungslagen aufeinanderfolgend auf der selben Seite der genannten Lage, während sie axial zur Äquatorialebene des Reifens gegen mindestens eines der seitlichen Enden der Verstärkungslage laufen, mit mindestens einer Schicht aus Verbindungsgummi mit einem ersten Elastizitätsmodul (5, 6, 7, 26) in Verbindung stehen, und dann einer Schicht aus Verbindungsgummi mit einem Elastizitätsmodul (9, 10, 12, 13, 30, 31), der niedriger ist als das erste, und daß die genannte Gürtelbewehrung hergestellt wird, indem man die genannten Drähte der genannten beiden Verstärkungslagen und die genannten Schichten aus Verbindungsgummi unabhängig aufbringt.

2. Reifen nach Anspruch 1, worin die axialen Breiten der beiden Verstärkungslagen (3, 4) des Scheitels (1) unterschiedlich sind, wobei die Drähte, die mit den Schichten aus Verbindungsgummi mit einem ersten (6) und einem zweiten (9) Elastizitätsmodul in Berührung stehen, Drähte der Verstärkungslage (3) sind, deren axiale Breite L die kleinste ist, und worin die genannten Schichten aus Verbindungsgummi mit einem ersten (6) und einem zweiten (9) Elastizitätsmodul radial auf der Seite der anderen Verstärkungslage (4) des Scheitels angeordnet sind.

3. Reifen nach Anspruch 1, worin die genannten Schichten aus Verbindungsgummi mit einem ersten (6, 26) und einem zweiten (10, 30) Elastizitätsmodul radial zwischen den genannten beiden Verstärkungslagen (3, 4, 23, 24) des Scheitels angeordnet sind und jeweils in Berührung mit den Drähten der genannten, beiden Scheitellagen (3, 4, 23, 24) stehen.

4. Reifen nach Anspruch 3, worin die Drähte mindestens eines der axialen Enden der Verstärkungslage (3, 23) des Scheitels (1, 20), deren axiale Breite L am kleinsten ist, radial zu den beiden Seiten der genannten Lage (3, 23) mit der genannten Schicht aus Verbindungsgummi mit einem zweiten Elastizitätsmodul (10, 12, 30, 31) in Verbindung stehen.

5. Reifen nach Anspruch 3, worin die Drähte der axialen Enden der beiden Verstärkungslagen (3, 4) des Scheitels, die mindestens auf der selben Seite der Äquatorialebene angeordnet sind, radial zu den beiden Seiten der genannten Lagen in Berührung mit der genannten Schicht aus Verbindungsgummi (10, 12, 13) mit einem zweiten Elastizitätsmodul stehen.

6. Reifen nach einem der Ansprüche 1 bis 5, worin man außerdem eine Schicht aus Gummi mit einem dritten Elastizitätsmodul (33) zwischen den axialen Enden der beiden genannten Scheitel-Verstärkungslagen (23, 24) mindestens auf der einen Seite der Äquatorialebene anordnet, und worin der dritte Elastizitätsmodul kleiner ist als der zweite Elastizitätsmodul.

7. Reifen nach einem der Ansprüche 1 bis 6, worin die axiale Breite der Berührungszonen zwischen der Schicht aus Verbindungsgummi (9, 10, 12, 13, 30, 31) mit einem zweiten Elastizitätsmodul und den Drähten einer Verstärkungslage (3, 4, 23, 24) größer ist als 5% der halben, axialen Breite der genannten Verstärkungslage.

8. Reifen nach einem der Ansprüche 1 bis 7, worin die axiale Breite der Berührungszonen zwischen der Schicht aus Verbindungsgummi (9, 10, 12, 13, 30, 31) mit einem zweiten Elastizitätsmodul und den Drähten einer Verstärkungslage (3, 4, 23, 24) kleiner ist als 30% der halben, axialen Breite der genannten Verstärkungslage.

9. Reifen nach einem der Ansprüche 1 bis 8, worin die Drähte der genannten, radial äußeren Verstärkungslage (23) mindestens in der zentralen Zone der genannten Lage auf der radial äußeren Seite in Berührung mit einer Schicht aus Verbindungsgummi (27) mit einem vierten Elastizitätsmodul stehen, und worin der vierte Elastizitätsmodul kleiner ist als der erste Elastizitätsmodul.

10. Reifen nach einem der Ansprüche 1 bis 9, worin das Verhältnis zwischen dem zweiten Elastizitätsmodul und dem ersten Elastizitätsmodul zwischen 0,5 und 0,9 liegt.

11. Reifen nach einem der Ansprüche 1 bis 9, worin das Verhältnis zwischen dem zweiten Elastizitätsmodul und dem ersten Elastizitätsmodul zwischen 0,6 und 0,8 liegt.

12. Reifen nach einem der Ansprüche 1 bis 11, worin der erste Elastizitätsmodul zwischen 9 und 13 MPa liegt.

13. Reifen nach einem der Ansprüche 6 bis 12, worin der dritte Elastizitätsmodul zwischen 3 und 6 MPa liegt.

14. Reifen nach einem der Ansprüche 9 bis 13, worin der vierte Elastizitätsmodul zwischen 3 und 8 MPa liegt.

15. Reifen nach einem der Ansprüche 1 bis 14, worin sich die Schichten aus Verbindungsgummi (9) axial um mindestens 3 mm über das axiale Ende der Drähte der Scheitellagen nach außen erstrecken.

16. Reifen nach einem der Ansprüche 1 bis 15, worin die Drähte mindestens einer Verstärkungslage (3, 4) im mittleren Teil des Scheitels mit einer komplementären Schicht aus Verbindungsgummi (14) mit einem fünften Elastizitätsmodul in Verbindung stehen, der größer ist als der erste Elastizitätsmodul.

17. Reifen nach Anspruch 16, worin der fünfte Elastizitätsmodul zwischen 12 und 20 MPa liegt.

18. Reifen nach einem der Ansprüche 1 bis 17, worin, während die Drähte einer der Scheitellagen (3, 4, 23, 24) einen Durchmesser Φ haben, jede Schicht aus Verbindungsgummi mit einem zweiten Elastizitätsmodul (9, 10, 12, 13, 30, 31), die in Berührung mit den genannten Drähten steht, mindestens in der seitlichen Endzone der genannten Scheitellage eine Dicke längs der genannten Drähte hat, die größer oder gleich Φ/2 ist.

19. Reifen nach einem der Ansprüche 1 bis 17, worin, während die Drähte einer der Scheitellagen (3, 4, 23, 24) einen Durchmesser Φ haben, jede Schicht aus Verbindungsgummi mit einem zweiten Elastizitätsmodul (9, 10, 12, 13, 30, 31), die in Berührung mit den genannten Drähten steht, mindestens in der seitlichen Endzone der genannten Scheitellage eine Dicke längs der genannten Drähte hat, die größer oder gleich Φ ist.

## Claims

1. A tyre comprising a crown (1, 20), two sidewalls and two beads, a carcass reinforcement anchored in the two beads and a belt reinforcement, said belt reinforcement comprising at least two superposed reinforcement plies (3, 4, 23, 24) formed of cords which are parallel within each ply and are crossed from one ply to the other, forming with the circumferential direction angles (α, β) of between 10° and 55°, **characterised in that** the cords of at least one of the two reinforcement plies are in contact successively, on the same side of said ply, moving axially from the equatorial plane of the tyre towards at least one of the lateral ends of the reinforcement ply, with, at least, one layer of bonding rubber of a first elasticity modulus (5, 6, 7, 26) then a layer of bonding rubber of a second elasticity modulus (9, 10, 12, 13, 30, 31) less than the first, and **in that** said belt reinforcement is produced by applying independently said cords of said two reinforcement plies and said layers of bonding rubber.

2. A tyre according to Claim 1, in which, the axial widths of the two reinforcement plies (3, 4) of the crown (1) being different, the cords in contact with the layers of bonding rubber of a first (6) and a second (9) elasticity modulus are the cords of the reinforcement ply (3) the axial width L of which is the smallest and in which said layers of bonding rubber of a first (6) and a second (9) elasticity modulus are arranged radially on the side of the other crown reinforcement ply (4).

3. A tyre according to Claim 1, in which said layers of bonding rubber of a first (6, 26) and a second (10, 30) elasticity modulus are arranged radially between said two crown reinforcement plies (3, 4, 23, 24) and are each in contact with the cords of said two crown plies (3, 4, 23, 24).

4. A tyre according to Claim 3, in which the cords of at least one of the axial ends of the reinforcement ply (3, 23) of the crown (1, 20) the axial width L of which is the smallest are in contact, radially on both sides of said ply (3, 23), with said layer of bonding rubber of a second elasticity modulus (10, 12, 30,

5. A tyre according to Claim 3, in which the cords of the axial ends of the two crown reinforcement plies (3, 4) arranged, at least, on the same side of the equatorial plane, are in contact, radially on both sides of said plies, with said layer of bonding rubber (10, 12,13) of a second elasticity modulus.

6. A tyre according to one of Claims 1 to 5, in which, furthermore, a layer of rubber of a third elasticity modulus (33) is arranged between the axial ends of said two crown reinforcement plies (23, 24), on one side, at least, of the equatorial plane, and in which the third elasticity modulus is less than the second elasticity modulus.

7. A tyre according to one of Claims 1 to 6, in which the axial width of the zones of contact between a layer of bonding rubber (9, 10, 12, 13, 30, 31) of a second elasticity modulus and the cords of a reinforcement ply (3, 4, 23, 24) is greater than 5% of half the axial width of said reinforcement ply.

8. A tyre according to one of Claims 1 to 7, in which the axial width of the zones of contact between a layer of bonding rubber (9, 10, 12, 13, 30, 31) of a second elasticity modulus and the cords of a reinforcement ply (3, 4, 23, 24) is less than 30% of half the axial width of said reinforcement ply.

9. A tyre according to one of Claims 1 to 8, in which the cords of said radially outer reinforcement ply (23) are in contact, at least in the central zone of said ply, on the radially outer side, with a layer of bonding rubber (27) of a fourth elasticity modulus, and in which the fourth elasticity modulus is less than the first elasticity modulus.

10. A tyre according to one of Claims 1 to 9, in which the ratio between the second elasticity modulus and the first elasticity modulus is of between 0.5 and 0.9.

11. A tyre according to one of Claims 1 to 9, in which the ratio between the second elasticity modulus and the first elasticity modulus is between 0.6 and 0.8.

12. A tyre according to one of Claims 1 to 11, in which the first elasticity modulus is of between 9 and 13 MPa.

13. A tyre according to one of Claims 6 to 12, in which the third elasticity modulus is of between 3 and 6 MPa.

14. A tyre according to one of Claims 9 to 13, in which the fourth elasticity modulus is of between 3 and 8 MPa.

15. A tyre according to one of Claims 1 to 14, in which the layers of bonding rubber (9) extend axially by at least 3 mm externally beyond the axial end of the cords of the crown plies.

16. A tyre according to one of Claims 1 to 15, in which the cords of at least one of the reinforcement plies (3, 4) are in contact, in the central part of the crown, with a complementary layer of bonding rubber (14) of a fifth elasticity modulus greater than the first elasticity modulus.

17. A tyre according to Claim 16, in which the fifth elasticity modulus is of between 12 and 20 MPa.

18. A tyre according to one of Claims 1 to 17, in which, the cords of one of the crown plies (3, 4, 23, 24) having a diameter Φ, any layer of bonding rubber of a second elasticity modulus (9, 10, 12, 13, 30, 31) in contact with said cords has, at least in the lateral end zone of said crown ply, a thickness level with said cords greater than or equal to Φ/2.

19. A tyre according to one of Claims 1 to 17, in which, the cords of one of the crown plies (3, 4, 23, 24) having a diameter Φ, any layer of bonding rubber of a second elasticity modulus (9, 10, 12, 13, 30, 31) in contact with said cords has, at least in the lateral end zone of said crown ply, a thickness level with said cords greater than or equal to Φ.
